# EUROPEAN PATENT SPECIFICATION

(11) **EP 2 083 649 B1**
(45) Date of publication and mention of the grant of the patent: **07.07.2010**
(21) Application number: 07729124.3
(22) Date of filing: 15.05.2007
(51) Int. Cl.: A44B 11/28

(54) **FASTENING CLIP DEVICE**
BEFESTIGUNGSKLAMMERVORRICHTUNG
DISPOSITIF DE PINCE D'ATTACHE

(30) Priority: 18.05.2006 IT VE20060029
(43) Date of publication of application: 05.08.2009
(73) Proprietor: EVOLUZIONE S.R.L., 31049 Valdobbiadene (Trevisio) (IT)
(72) Inventor: MIOTTO, Onorio, I-31049 Valdobbiadene (IT)
(74) Representative: Piovesana, Paolo
(86) International application number: PCT/EP2007/054672
(87) International publication number: WO 2007/135015

(56) References cited:
- CH-A- 507 678
- DE-A1-102005 013 031

## Description

The present invention relates to a fastening clip device.

Fastening clip devices are known for fastening the sides of sports jackets, shoulder straps for large bags, etc.

Such a clip is disclosed in document DE 10 2005 013031.

These known devices consist substantially of a clip fixed to a flexible strap and formed from two arms pivoted about a central pin and maintained elastically spaced apart by a spring. One of the two arms of the clip has a U-curved end to retain the end of the other arm and to form a seat for housing a ring fixed to another flexible strap.

A drawback of this clip is the considerable effort required to disengage the ring from the clip, as the ring has to be brought close to the curved portion with one hand, then the ends of the two contacting arms have to be pressed with the other hand to create a passage and the ring then passed through the passage bounded by the two spaced-apart arms.

An object of the invention is to eliminate these drawbacks by providing a fastening clip device which enables the ring to be disengaged easily and comfortably.

This and other objects which will be apparent from the ensuing description are attained according to the invention by a fastening clip device as claimed in claim 1.

A preferred embodiment of the present invention is further clarified hereinafter with reference to the accompanying drawings, in which:

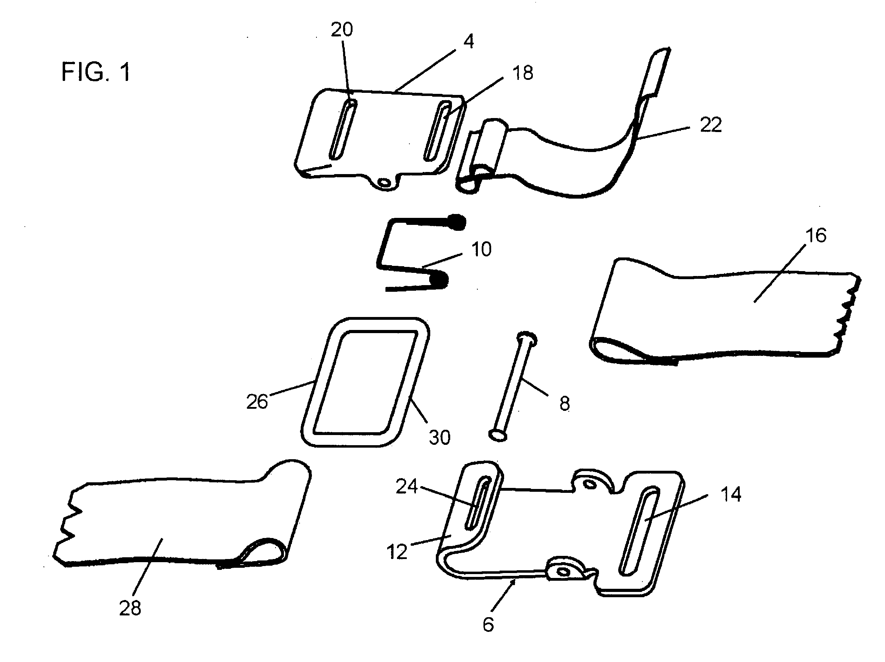

- Figure 1: is an exploded perspective view of the fastening clip device according to the invention,
- Figure 2: is a longitudinal section therethrough on the line II-II of Figure 3,
- Figure 3: is a plan view thereof,
- Figure 4: is a perspective view thereof,
- Figures 5, 6 and 7: show the device in the same view as Figure 2 during the disengagement of the ring.

As can be seen from the figures, the fastening device of the invention comprises substantially a clip 2 consisting of two arms 4, 6 pivoted together about a transverse pin 8 and maintained spaced apart at one end by a spring 10.

The arm 6 presents a U-bent end 12 and is provided at its other end with a slotted aperture 14 for engaging a strap 16.

The other arm 4 is substantially flat and comprises two transverse slotted apertures 18, 20 respectively, through which a flexible puller 22 is passed to extend below the pin 8, it presenting a free end and an end fixed into a slotted hole 24 provided in the curved portion 12 of the arm 6.

The fastening device of the invention operates in the following manner.

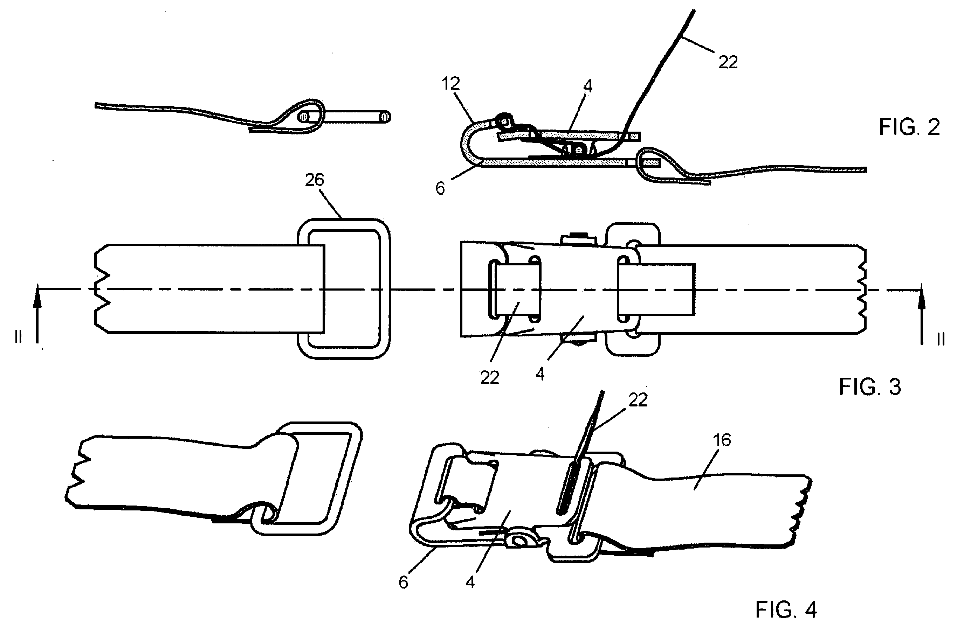

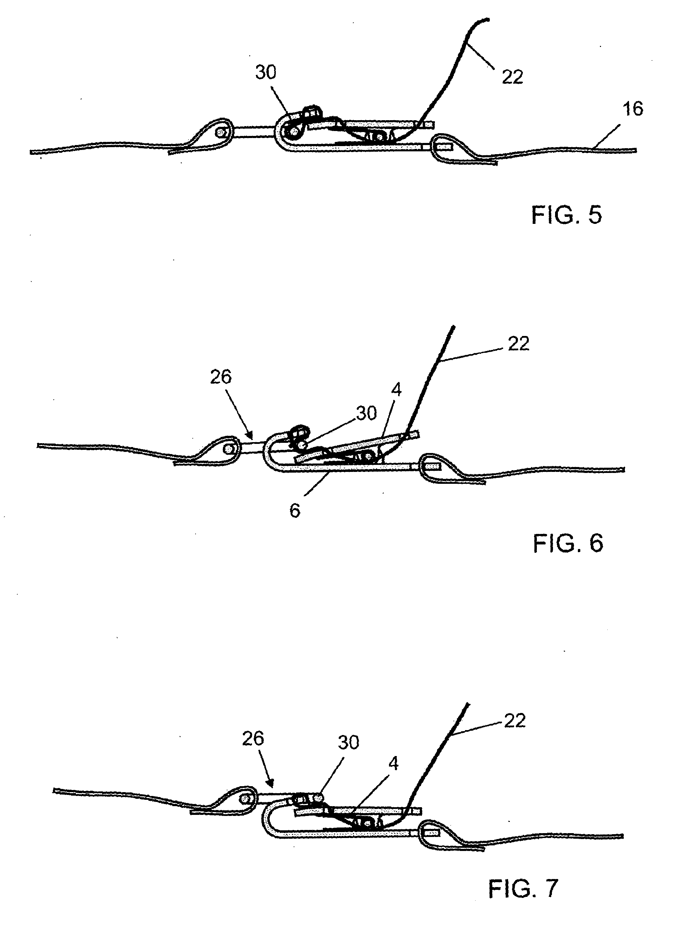

By overcoming the elastic reaction of the spring 10, the user inserts the ring 26, fixed to a strap 28, between the two arms 4 and 6 (see Figure 2). During this insertion a side 30 of the ring 26 interferes with the puller 22, which is forced inside the two arms (see Figure 5).

When the ring is to be disengaged from the clip 2, the puller 22 is pulled, this operation firstly causing the end of the arm 4 to withdraw from the curved portion 12 of the other arm 6 (see Figure 6), and then causing the side 30 of the ring 16 to separate from the two arms 4 and 6.

On further pulling the puller 22 the portion 30 of the ring 16 completely leaves the clip, and the ends of the arms 4 and 6 again come into mutual contact (see Figure 7).

From the aforegoing it is apparent that the fastening device of the invention enables the ring to be disengaged in a simple and comfortable manner using only one hand.

## Claims

1. A fastening clip device comprising arms (4, 6) of different length pivoted together about a transverse pin (8) on one and the other side thereof, and elastic means (10) which maintain two facing portions of said arms spaced apart, one end (12) of one (6) of said arms being bent substantially to U-shape to retain the end of the other arm against the action of said elastic means, **characterised in that** the arm (4) of smaller length comprises two apertures (18, 20) positioned on one and the other side of the pin (8) about which the two arms are pivoted, and by comprising a flexible puller (22) which passes through said apertures (18, 20), extends between the pin (8) and the arm (6) of greater length, and is fixed to the curved portion (12) of said arm (6).

2. A device as claimed in claim 1, **characterised in that** the puller (22) consists of a band inserted through slotted apertures.

3. A device as claimed in claim 1, **characterised in that** the puller (22) is fixed to the free end of the curved portion (12) of the arm (4).

## Patentansprüche

1. Ein Befestigungsclip bestehend aus unterschiedlich langen Klemmarmen (4, 6), die über einen quer zu ihnen verlaufenden Stift (8) zusammengehalten werden. Über ein elastisches Element (10) werden die zwei sich gegenüber liegenden Teile der besagten Arme auseinandergehalten. Ein Ende (12) eines der genannten Arme (6) ist zu einer U-Form gebogen. Gegen dieses Ende wird das Ende des anderen Arms durch die Kraft des besagten elastischen Elements gedrückt. Der kürzere der beiden Arme (4) besitzt zwei Öffnungen(18, 20), die sich an beiden äusseren Seiten, rechts und links des Stifts (8) befinden, über den die beiden Klemmarme verbunden sind. Ein flexibler Zugriemen (22) läuft durch die genannten Öffnungen (18, 20) und unter dem Stift (8) hindurch, ausgehend vom Arm grösserer Länge (6), an dem der Riemen am gebogenen Ende (12) befestigt ist.

2. Ein Gerät wie in 1 beschrieben, charakterisiert **dadurch**, dass der Zugriemen (22) durch zwei geschlitzte Öffnungen läuft.

3. Ein Gerät wie in 1 beschrieben, charakterisiert **dadurch**, dass der Zugriemen (22) am freien Ende der gebogenen Seite (12) des Klemmarms (4) befestigt ist.

## Revendications

1. Dispositif de pince de fixation comprenant des bras (4, 6) de longueur différente tournés ensemble autour d'une tige transversale (8) d'un et de l'autre côté de cette dernière, et des moyens élastiques (10) qui maintiennent deux parties opposées desdits bras de manière espacée, une extrémité (12) d'un (6) desdits bras étant pliée sensiblement en forme de U pour retenir l'extrémité de l'autre bras contre l'action desdits moyens élastiques, **caractérisé en ce que** le bras (4) de longueur plus petite comprend deux ouvertures (18, 20) positionnées d'un et de l'autre côté de la tige (8) autour de laquelle les deux bras sont tournés, et par le fait qu'il comprend un dispositif de tirage flexible (22) qui passe à travers lesdites ouvertures (18, 20), s'étend entre la tige (8) et le bras (6) de longueur plus importante, et est fixé à la partie incurvée (12) dudit bras (6).

2. Dispositif selon la revendication 1, **caractérisé en ce que** le dispositif de tirage (22) se compose d'une bande insérée à travers des ouvertures fendues.

3. Dispositif selon la revendication 1, **caractérisé en ce que** le dispositif de tirage (22) est fixé à l'extrémité libre de la partie incurvée (12) du bras (4).
